# EUROPEAN PATENT SPECIFICATION

(11) **EP 3 034 879 B1**
(45) Date of publication and mention of the grant of the patent: **08.12.2021**
(21) Application number: 15003594.7
(22) Date of filing: 16.12.2015
(51) Int. Cl.: H02K 5/22, H02K 7/14, H02K 11/30, H02K 11/33, F04D 13/06, F04D 29/62

(54) **PUMP COMPONENT**
PUMPENKOMPONENTE
COMPOSANT DE POMPE

(30) Priority: 18.12.2014 CN 201420813509 U
(43) Date of publication of application: 22.06.2016
(73) Proprietor: Hefei Xinhu Canned Motor Pump Co., Ltd., Anhui Province 230088 (CN)
(72) Inventor: HAN, Yuanping, Wenling city (CN); LIU, Bangliang, Wenling city (CN); WANG, Yukuan, Wenling City (CN); ZHOU, Jiao, Beizhaochuan Town (CN)
(74) Representative: Winter, Brandl - Partnerschaft mbB

(56) References cited:
- EP-A1- 2 166 230
- DE-U1-202005 004 435
- US-A- 6 132 184
- US-A1- 2010 090 635
- US-A1- 2010 111 729
- US-B1- 6 831 382

## Description

### Background Art

A pump assembly driven by a motor, for example a heat cycle pump, usually has a pump shell. The pump shell is provided with a stator shell and the stator shell is internally provided with a motor for driving an impeller disposed in the pump shell. The stator shell is usually provided with a terminal box. The terminal box accommodates electric connectors of the motor and electronic or electric elements for control over and/or adjustment to the motor. Thus, it is known that this type of terminal box is fixed on the shaft side (namely the end side of the stator shell away from the pump shell). Additionally, the terminal box is usually provided with a display element and an operating element for controlling and setting the pump component.

In US 2010/0 111 729 A1, a conventional pump assembly with an electric motor is shown. The pump assembly includes a stator having an iron core and windings arranged thereon and being arranged in a stator housing surrounding the electric motor to the outside. The stator housing is formed as a cast component, into which the iron core is cast, and the windings have been deposited on the iron core after the casting of the iron core into the stator housing.

However, the electric connectors of the pump component with the above structure are irrationally located and have inconvenience in connection with the wiring parts. Moreover, the current electric connectors and the terminal box are integrally molded, causing difficulties in core extraction, demolding and production and enhancing the production cost.

### Disclosure of the Present disclosure

Aiming at the defect of irrational location of the electric connectors of the existing pump components, the purpose of the present disclosure is to provide a conveniently produced, assembled and operated pump component to solve the above problems.

The present disclosure employs the following technical solution to solve the technical problems:
A pump component. The pump component is provided with a motor disposed in a stator shell, wherein the stator shell is provided with a terminal box on an axial end side. The terminal box has a tubular shell part. The first axial end side of the tubular shell part is placed on the axial end side of the stator shell, wherein an electric connector is arranged between the first axial end side of the tubular shell part and the axial end side of the stator shell. The second axial end side of the tubular shell part is closed by at least one cover. The terminal box is internally provided with an operation and display circuit board and a motor drive circuit in electric connection with the operation and display circuit board and for control over working of the motor. The cover is provided with a plurality of operation elements and a display hole, characterized in that, the tubular shell part and the electric connector are separately molded. The periphery of the tubular shell part is formed with a chute extending from the first axial end side of the tubular shell part to the middle portion of the periphery of the tubular shell part and matched with the electric connector. During assembling, first, the electric connector is fixed on the axial end side of the stator shell through a fastener. Then, the tubular shell part is mounted onto the axial end side of the stator shell so that the electric connector is limited along the chute in axial slidable insertion, and the axial height of the chute is matched with the axial height of the electric connector. Then, the first axial end side of the tubular shell part and the axial end side of the stator shell are connected through a fastener such that the electric connector is assembled and limited in the chute and the electric connector is conductive connection with the motor drive circuit in the terminal box and a connector of the motor.

In a preferable embodiment of the present disclosure, the electric connector is a connecting plug, a connecting terminal or a connecting cable.

In a preferable embodiment of the present disclosure, the electric connector is a connecting plug. The connecting plug has a plurality of electric contacts. One of the plurality of electric contacts is set as an earthing contact in connection with the stator shell to be in conductive connection with an earthing connector on the stator shell and the others of the plurality of electric contacts extend into the terminal box to be in conductive connection with the motor drive circuit.

In a preferable embodiment of the present disclosure, the joint between the first axial end side of the tubular shell part and the axial end side of the stator shell is provided with a sealing strip. The joint between the electric connector and the chute of the tubular shell part and the joint between the electric connector and the axial end side of the stator shell are also provided with sealing strips.

In a preferable embodiment of the present disclosure, the periphery of the cover is provided with a slide strip, and the outer circumference of the tubular part shell is provided with a bar-shaped chute matched with the slide strip.

In a preferable embodiment of the present disclosure, the inside end face of the cover is provided with a plurality of locating guide poles penetrating the operation and display circuit board and the motor drive circuit board and a plurality of screw counterbores.

In a preferable embodiment of the present disclosure, the operating element and the display hole of the cover are provided with dustproof signs.

By employing the above technical solution, the present disclosure changes the traditional location of the electric connector and brings convenience in assembly, and the terminal box can be assemblied by simply installing the electric connector at the tail end of the shell stator, greatly improving the assembling efficiency. Moreover, the tubular shell part and the electric connector are separately molded, greatly reducing the difficulties in demolding, enhancing the production efficiency and lowering the production cost.

### Description of Several Views of the Attached Drawings

To more clearly describe the technical solution in the embodiments of the present disclosure or in the prior art, the following are brief introduction of the attached drawings in the embodiments or in the prior art. Obviously, the attached drawings described below only involve some embodiments of the present disclosure. For those originally skilled in this field, other drawings can be made according to those drawings without creative labor.
Figure 1 is a sectional view of one embodiment of the present disclosure.
Figure 2 is an exploded diagram of one embodiment of the present disclosure in another in one view of angle.
Figure 3 is an amplified structural view of position I in Figure 2.
Figure 4 is an exploded diagram of one embodiment of the present disclosure in another in another view of angle.
Figure 5 is an amplified structural view of position II in Figure 4.
Figure 6 is a state diagram of the match between the tubular shell part and the electric connector of one embodiment of the present disclosure.

### Detailed Description of the Present disclosure

To ensure that the technical means, design characteristics, purposes and effects of the present disclosure are easily understood, the present disclosure is further described below.

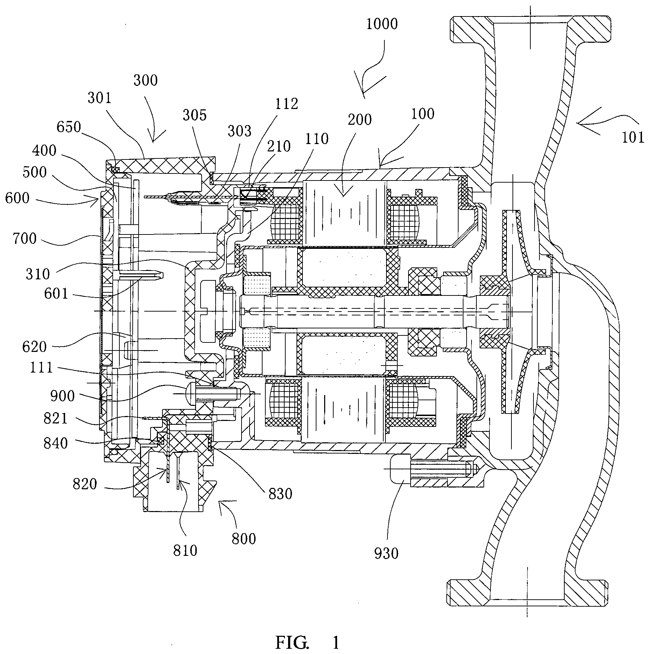

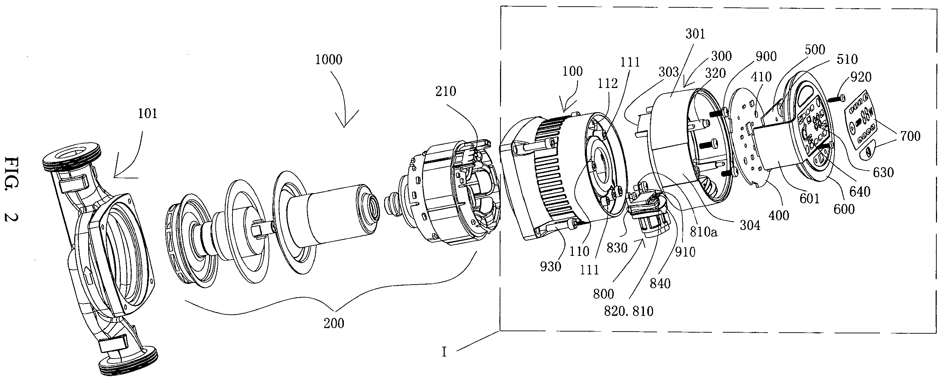

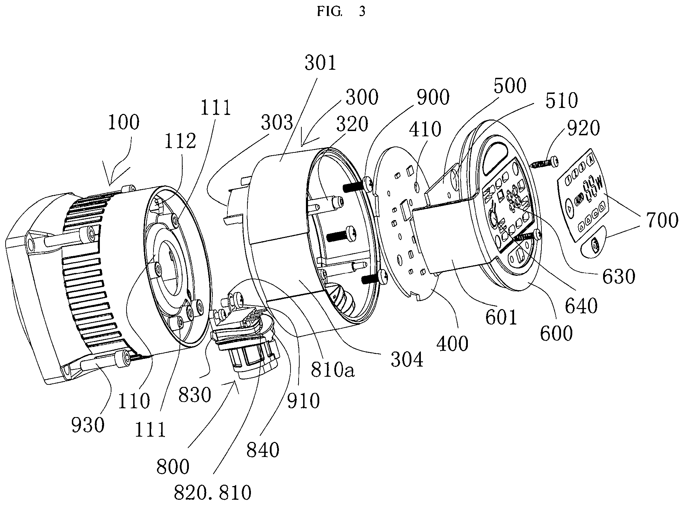

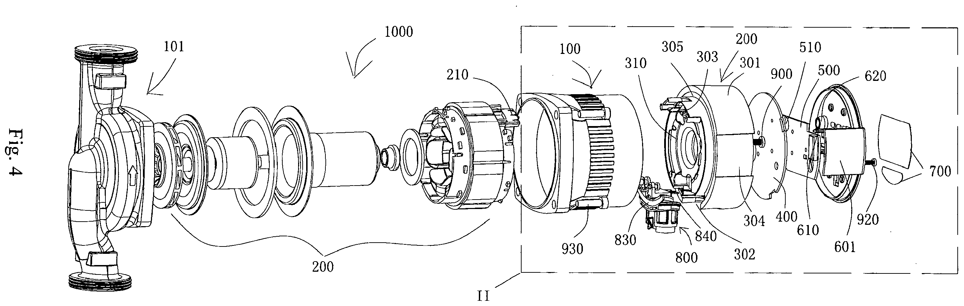

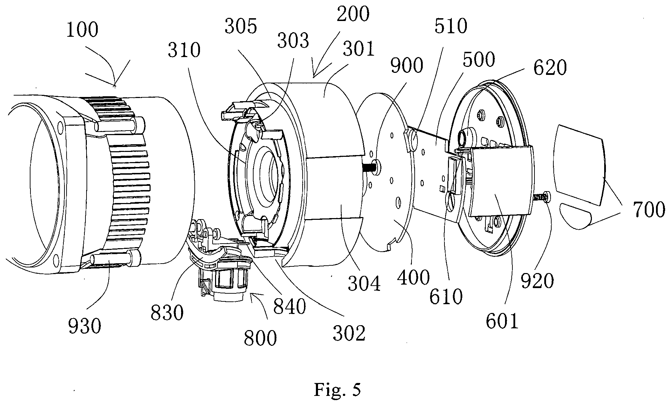

Refer to Figures 1-5. A pump component 1000 has a motor 200 disposed in a stator shell 100, wherein an axial end side 110 (corresponding to the left end side of the stator shell 100 in this embodiment) of the stator shell 100 is provided with a terminal box 300. The terminal box 300 has a tubular shell part 301. The first axial end side 310 (corresponding to the right end side of the tubular shell part 301 in this embodiment) is placed on the left axial end side 110 of the stator shell 100 and connected through a plurality of screws 900. The opposite second axial end side of the tubular shell part 301 is closed by a cover 600.

The terminal box 300 is internally provided with an operation and display circuit board 500 and a motor drive circuit board 400. The operation and display circuit board 500 is set close to the cover 600. The motor drive circuit board 400 is set close to the operation and display circuit board 500 and a pin (not shown in the figure) of the motor drive circuit board 400 is inserted into a pin slot (not shown in the figure) of the operation and display circuit board 500, so the two realize conductive connection. To facilitate the location and installation of the operation and display circuit board 500 and the motor drive circuit board 400, the inside end face of the cover 600 is provided with a plurality of locating guide poles 610 penetrating holes 510 of the operation and display circuit board 500 and holes 410 of the motor drive circuit board 400 and a plurality of screw counterbores 620. The cover 600 is provided with a plurality of operating elements 640 and a display hole 630; the operating elements 640 can trigger the operation and display circuit board 500; and the display hole 630 can display the operation result of the operation and display circuit board 500. The operating elements 640 and the display hole 630 of the cover 600 are provided with dustproof signs 700. In this embodiment, the operating elements 640 can be buttons, and the operation and display circuit board 500 is provided with a plurality of display lights (not shown in the figure). To further facilitate the connection and location of the cover 600 and the terminal box 300, the circumference of the cover 600 is provided with a slide strip 601; the outer circumferential surface of the tubular shell part 301 is provided with a strip-like chute 304 matched with the slide strip 601.

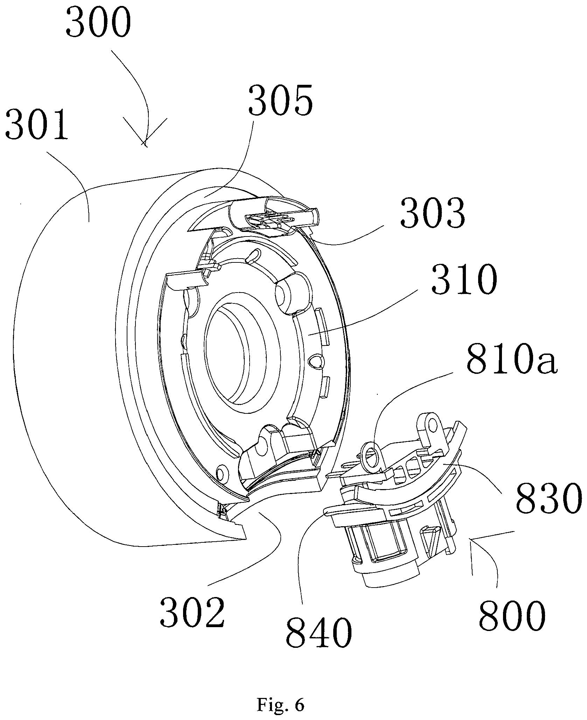

The tubular shell part 301 and the electric connector 800 are separately molded, and the outer circumferential surface of the tubular shell part 301 is formed with a groove portion matched with the electric connector 800. In this embodiment, as shown in Figure 6 , the groove portion is a chute 302 extending from the first axial end side 310 of the tubular shell part 301 to the middle portion of the periphery of the tubular shell part 301. The electric connector 800 is a connecting plug, of course, can be other electric connectors that those skilled in this field can easily think of, for example a connecting terminal or a connecting cable. The connecting plug has a plurality of electric contracts 820, 810; one of the plurality of electric contracts 820, 810 is set as the earthing contact 810 in connection with the stator shell 100. The earthing contact 810 is connected with a stator ring 810a and is in conductive connection with a screw hole 111 on the stator shell 100 through a screw 910. The tail ends 821 of the others of the plurality of electric contacts 820 axially extend into the terminal 300 to be in conductive connection with the pin slots (not shown in the figure) of the motor drive circuit board 400.

To ensure sealability of the connection among the terminal box 300, the electric connector 800 and the stator shell 100, in this embodiment, the joint between the first axial end side 310 of the tubular shell part 301 and the axial end side 110 of the stator shell 100 is provided with a sealing strip 305, the joint between the electric connector 800 and the chute 302 of the tubular shell part 301 and the joint between the electric connector 800 and the axial end side 110 of the stator shell 100 are also provided with sealing strips 840, 830. To ensure tighter connection among the terminal box 300, the electric connector 800 and the stator shell 100 and the seam-less match of the sealing strips 305,830, in this embodiment, the axial height of the chute 302 is matched with that of the electric connector 800.

The assembling process of the present disclosure is as follows:
First, the motor 200 is assembled in the stator shell 100; then the stator shell 100 is fixedly connected with the pump body 101 through a screw 930 and the axial end side 110 of the stator shell 100 is formed with a through-hole 112. Second, the screw 910 is rotated to pass the stator ring 810a on the electric connector 800 so as to fix the electric connector 800 on the axial end side 110 of the stator shell 100; then the tubular shell part 301 is covered; in such circumstances, the electric connector 800 is limited in the chute 302 in axial slidable insertion, and the tubular shell part 301 is connected with the axial end side 110 of the stator shell 100 through the screw 900 which rotates to pass the first axial end side 310 of the tubular shell part 301 and is tightened on the screw hole 111 of the axial end side 110 of the stator shell 100. Third, the cover 600, the operation and display circuit board 500 and the motor drive circuit board 400 which are assembled together are covered on the opposite second axial end side of the tubular shell part 301. A sealing ring 650 is disposed between the cover 600 and the opposite second axial end side of the tubular shell part 301. The slide strip 601 and the strip-like chute 304 are limited in a slide fit way. Then the three are fixed with the terminal box 300 through the screw 320 rotate to pass the screw counterbore 620 on the cover 600, the operation and display circuit board 500 and the motor drive circuit 400 and tightened in the terminal box 300. At this time, one end of the conductive pin 303 penetrating the terminal box 300 is in conductive connection with the pin slot of the motor drive circuit board 400, and the other end of the conductive pin 303 penetrates the through-hole 112 on the axial end side 110 of the stator shell 100 to be in conductive connection with the pin slot 210 of the motor 200. Finally, the dustproof signs 700 are pasted to complete the assembling.

The present disclosure changes the traditional location of the electric connector 800 and brings convenience in assembly, greatly improving the assembling efficiency. Moreover, the tubular shell part 301 and the electric connector 800 are separately molded, greatly reducing the difficulties in demolding, enhancing the production efficiency and lowering the production cost.

The basic principle, main characteristics and advantages of the present disclosure are described above. Those skilled in this field shall understand that the present disclosure is not limited by the above embodiments; the embodiments and the description only explain the principle of the present disclosure. Based on the concept and scope of the present disclosure, various changes and improvements can be made, which shall all fall within the scope of the present disclosure claimed for protection. The Claims and the equivalent substances define the scope of the present disclosure claimed for protection.

## Claims

1. A pump component (1000), said pump component (1000) having a motor (200) disposed in a stator shell (100), wherein the stator shell (100) is provided with a terminal box (300) on an axial end side (110); the terminal box (300) has a tubular shell part (301); the first axial end side (310) of the tubular shell part (301) is placed on the axial end side (110) of the stator shell (100), wherein an electric connector (800) is arranged between the first axial end side (310) of the tubular shell part (301) and the axial end side (110) of the stator shell (100); the second axial end side of the tubular shell part (301) is closed by at least one cover (600); the terminal box (300) is internally provided with an operation and display circuit board (500) and a motor drive circuit (400) in electric connection with the operation and display circuit board (500) and for control over working of the motor (200); the cover (600) is provided with a plurality of operation elements (640) and a display hole (630), wherein the tubular shell part (301) and the electric connector (800) are separately molded; the outer circumferential surface of the tubular shell part (301) is formed with a chute (302) extending from the first axial end side (310) of the tubular shell part (301) to the middle portion of the periphery of the tubular shell part (301) and matched with the electric connector (800); during assembling, first the electric connector (800) is fixed on the axial end side (110) of the stator shell (100) through a fastener (910); then the tubular shell part (301) is mounted onto the axial end side (110) of the stator shell (100) so that the electric connector (800) is limited along the chute (302) in axial slidable insertion, and the axial height of the chute (302) is matched with the axial height of the electric connector (800); then the first axial end side (310) of the tubular shell part (301) and the axial end side (110) of the stator shell (100) are connected through a fastener (900) such that the electric connector (800) is assembled and limited in the chute (302); and the electric connector (800) is in electric connection with the motor drive circuit (400) in the terminal box (300) and a connector (210) of the motor (200).

2. The pump component (1000) according to claim 1, wherein the electric connector (800) is a connecting plug, a connecting terminal or a connecting cable.

3. The pump component (1000) according to claim wherein the electric connector (800) is a connecting plug; the connecting plug has a plurality of electric contacts (810, 820); one of the plurality of electric contacts (810, 820) is set as an earthing contact (810) in connection with the stator shell (100) to be in conductive connection with an earthing connector on the stator shell (100) and the others of the plurality of electric contacts (820) extend into the terminal box (300) to be in conductive connection with the motor drive circuit (400).

4. The pump component (1000) according to claim 1, wherein the joint between the first axial end side (310) of the tubular shell part (301) and the axial end side (110) of the stator shell (100) is provided with a sealing strip (305); the joint between the electric connector (800) and the chute (302) of the tubular shell part (301) and the joint between the electric connector (800) and the axial end side (110) of the stator shell (100) are also provided with sealing strips (830, 840).

5. The pump component (1000) according to claim 1, wherein the circumference of the cover (600) is provided with a slide strip (601), and the outer circumference of the tubular part shell (301) is provided with a bar-shaped chute (304) matched with the slide strip (601).

6. The pump component (1000) according to claim 1 wherein the inside end face of the cover (600) is provided with a plurality of locating guide poles (610) penetrating the operation and display circuit board (500) and the motor drive circuit board (400) and a plurality of screw counterbores (620).

7. The pump component (1000) according to claim 1 wherein the operating elements (640) and the display hole (630) of the cover (600) are provided with dustproof signs (700).

## Patentansprüche

1. Pumpenkomponente (1000), wobei die Pumpenkomponente (1000) einen Motor (200) hat, der in einem Statorgehäuse (100) angeordnet ist, wobei das Statorgehäuse (100) mit einem Anschlusskasten (300) an einer axialen Endseite (110) versehen ist; wobei der Anschlusskasten (300) einen rohrförmigen Gehäuseteil (301) aufweist; wobei die erste axiale Endseite (310) des rohrförmigen Gehäuseteils (301) an der axialen Endseite (110) des Statorgehäuses (100) platziert ist; wobei ein elektrischer Verbinder (800) zwischen der ersten axialen Endseite (310) des rohrförmigen Gehäuseteils (301) und der axialen Endseite (110) des Statorgehäuses (100) angeordnet ist; wobei die zweite axiale Endseite des rohrförmigen Gehäuseteils (301) von wenigstens einer Abdeckung (600) verschlossen ist; wobei der Anschlusskasten (300) im Inneren mit einer Betriebs- und Anzeigeplatine (500) und einer Motorantriebsschaltung (400) in elektrischer Verbindung mit der Betriebs- und Anzeigeplatine (500) und zum Steuern des Betriebs des Motors (200) versehen ist; wobei die Abdeckung (600) mit einer Vielzahl von Betriebselementen (640) und einer Anzeigeöffnung (630) versehen ist; wobei das rohrförmige Gehäuseteil (301) und der elektrische Verbinder (800) separat geformt sind; wobei die Außenumfangsfläche des rohrförmigen Gehäuseteils (301) mit einer Nut (302) gebildet ist, die sich von der ersten axialen Endseite (301) des rohrförmigen Gehäuseteils (301) zu dem Mittelabschnitt des Umfangs des rohrförmigen Gehäuseteils (301) erstreckt und mit dem elektrischen Verbinder (800) abgestimmt ist; wobei der elektrische Verbinder (800) während der Montage zuerst durch ein Befestigungselement (910) an der axialen Endseite (110) des Statorgehäuses (100) befestigt wird, dann das rohrförmige Gehäuseteil (301) an der axialen Endseite (110) des Statorgehäuses (100) befestigt wird, so dass der elektrische Verbinder (800) entlang der Nut (302) beim axial verschiebbaren Einsetzen begrenzt ist, und die axiale Höhe der Nut (302) mit der axialen Höhe des elektrischen Verbinders (800) abgestimmt ist; dann die erste axiale Endseite (310) des rohrförmige Gehäuseteils (301) und die axiale Endseite (110) des Statorgehäuses (100) durch ein Befestigungselement (900) verbunden wird, so dass der elektrische Verbinder (800) zusammengebaut und in der Nut (302) begrenzt ist; und wobei der elektrische Verbinder (800) elektrisch mit der Motorantriebsschaltung (400) in dem Anschlusskasten (300) und einem Verbinder (210) des Motors (200) verbunden ist.

2. Pumpenkomponente (1000) nach Anspruch 1, wobei der elektrische Verbinder (800) ein Verbindungsstecker, ein Verbindungsanschluss oder ein Verbindungskabel ist.

3. Pumpenkomponente (1000) nach Anspruch 2, wobei der elektrische Verbinder (800) ein Verbindungsstecker ist; wobei der Verbindungsstecker eine Vielzahl von elektrischen Kontakten (810, 820) aufweist; wobei einer der Vielzahl von elektrischen Kontakten (810, 820) als ein Erdungskontakt (810) in Verbindung mit dem Statorgehäuse (100) festgelegt ist, um in leitender Verbindung mit einem Erdungsverbinder an dem Statorgehäuse (100) zu stehen, und wobei die anderen der Vielzahl von elektrischen Kontakten (820) sich in den Anschlusskasten (300) erstrecken, um in leitender Verbindung mit der Motorantriebsschaltung (400) zu stehen.

4. Pumpenkomponente (1000) nach Anspruch 1, wobei die Verbindung zwischen der ersten axialen Endseite (310) des rohrförmigen Gehäuseteils (301) und der axialen Endseite (110) des Statorgehäuses (100) mit einem Dichtungsstreifen (305) versehen ist; und wobei die Verbindung zwischen dem elektrischen Verbinder (800) und der Nut (302) des rohrförmigen Gehäuseteils (301) und die Verbindung zwischen dem elektrischen Verbinder (800) und der axialen Endseite (110) des Statorgehäuses (100) ebenfalls mit Dichtungsstreifen (830, 840) versehen sind.

5. Pumpenkomponente (1000) nach Anspruch 1, wobei der Umfang der Abdeckung (600) mit einem Gleitstreifen (601) versehen ist und der Außenumfang des rohrförmigen Gehäuseteils (301) mit einer stabförmigen Nut (304), die mit dem Gleitstreifen (601) abgestimmt ist, versehen ist.

6. Pumpenkomponente (1000) nach Anspruch 1, wobei die innere Endfläche der Abdeckung (600) mit einer Vielzahl von Positionierungsleitstangen (610) versehen ist, die die Betriebs- und Anzeigeplatine (500) und die Motorantriebsplatine (400 und eine Vielzahl von Schraubsenkbohrungen (620) durchdringen.

7. Pumpenkomponente (1000) nach Anspruch 1, wobei die Betriebselemente (640) und die Anzeigeöffnung (630) der Abdeckung (600) mit staubdichten Zeichen (700) versehen sind.

## Revendications

1. Composant de pompe (1000), ledit composant de pompe (1000) présentant un moteur (200) disposé dans une coque de stator (100), dans lequel la coque de stator (100) est munie d'une boîte à bornes (300) sur un côté d'extrémité axiale (110) ; la boîte à bornes (300) présente une partie de coque tubulaire (301) ; le premier côté d'extrémité axiale (310) de la partie de coque tubulaire (301) est placé sur le côté d'extrémité axial (110) de la coque de stator (100), dans lequel un connecteur électrique (800) est agencé entre le premier côté d'extrémité axiale (310) de la partie de coque tubulaire (301) et le côté d'extrémité axiale (110) de la coque de stator (100) ; le second côté d'extrémité axiale de la partie de coque tubulaire (301) est fermé par au moins un couvercle (600) ; la boîte à bornes (300) est dotée en son sein d'une carte de circuit imprimé de fonctionnement et d'affichage (500) et d'un circuit d'entraînement de moteur (400) connecté électriquement à la carte de circuit imprimé de fonctionnement et d'affichage (500) et pour commander un fonctionnement du moteur (200) ; le couvercle (600) est muni d'une pluralité d'éléments d'actionnement (640) et d'un trou d'affichage (630), dans lequel la partie de coque tubulaire (301) et le connecteur électrique (800) sont moulés séparément; la surface circonférentielle extérieure de la partie de coque tubulaire (301) est formée avec une goulotte (302) s'étendant du premier côté d'extrémité axiale (310) de la partie de coque tubulaire (301) vers la partie médiane de la périphérie de la partie de coque tubulaire (301) et appariée au connecteur électrique (800) ; lors d'un assemblage, le connecteur électrique (800) est d'abord fixé sur le côté d'extrémité axiale (110) de la coque de stator (100) par l'intermédiaire d'une fixation (910) ; puis la partie de coque tubulaire (301) est montée sur le côté d'extrémité axiale (110) de la coque de stator (100) de sorte que le connecteur électrique (800) est limité le long de la goulotte (302) en insertion coulissante axiale, et la hauteur axiale de la goulotte (302) est appariée à la hauteur axiale du connecteur électrique (800) ; puis le premier côté d'extrémité axiale (310) de la partie de coque tubulaire (301) et le côté d'extrémité axiale (110) de la coque de stator (100) sont connectés par l'intermédiaire d'une fixation (900) de sorte que le connecteur électrique (800) est assemblé et limité dans la goulotte (302) ; et le connecteur électrique (800) est en connexion électrique avec le circuit d'entraînement de moteur (400) dans la boîte à bornes (300) et un connecteur (210) du moteur (200).

2. Composant de pompe (1000) selon la revendication 1, dans lequel le connecteur électrique (800) est une fiche de connexion, une borne de connexion ou un câble de connexion.

3. Composant de pompe (1000) selon la revendication 2, dans lequel le connecteur électrique (800) est une fiche de connexion ; la fiche de connexion présente une pluralité de contacts électriques (810, 820) ; un premier de la pluralité de contacts électriques (810, 820) est établi comme un contact de mise à la terre (810) en relation avec la coque de stator (100) pour être en connexion conductrice avec un connecteur de mise à la terre sur la coque de stator (100) et les autres de la pluralité de contacts électriques (820) s'étendent dans la boîte à bornes (300) pour être en connexion conductrice avec le circuit d'entraînement de moteur (400).

4. Composant de pompe (1000) selon la revendication 1, dans lequel le joint entre le premier côté d'extrémité axiale (310) de la partie de coque tubulaire (301) et le côté d'extrémité axiale (110) de la coque de stator (100) est muni d'un bande d'étanchéité (305) ; le joint entre le connecteur électrique (800) et la goulotte (302) de la partie de coque tubulaire (301) et le joint entre le connecteur électrique (800) et le côté d'extrémité axiale (110) de la coque de stator (100) sont également munis de bandes d'étanchéité (830, 840).

5. Composant de pompe (1000) selon la revendication 1, dans lequel la circonférence du couvercle (600) est pourvue d'une bande coulissante (601), et la circonférence extérieure de la partie de coque tubulaire (301) est munie d'une goulotte en forme de barre (304) appariée avec la bande coulissante (601).

6. Composant de pompe (1000) selon la revendication 1, dans lequel la face d'extrémité intérieure du couvercle (600) est munie d'une pluralité de pôles de guidage de positionnement (610) pénétrant dans la carte de circuit imprimé de fonctionnement et d'affichage (500) et la carte de circuit imprimé d'entraînement de moteur (400) et une pluralité de lamages de vis (620).

7. Composant de pompe (1000) selon la revendication 1, dans lequel les éléments d'actionnement (640) et le trou d'affichage (630) du couvercle (600) sont munis de panneaux anti-poussière (700).
